# EUROPÄISCHE PATENTSCHRIFT

(11) **EP 1 361 358 B1**
(45) Veröffentlichungstag und Bekanntmachung des Hinweises auf die Patenterteilung: **09.04.2008**
(21) Anmeldenummer: 02027254.8
(22) Anmeldetag: 06.12.2002
(51) Int. Cl.: F02M 59/36, F16K 31/06, F16K 1/14, F02M 63/02, F02M 59/46

(54) **Magnetventil, insbesondere Mengensteuerventil für Kraftstoffsysteme von Brennkraftmaschinen**
Solenoid valve, in particular metering control valve for fuel injection systems of internal combustion engines
Electrovanne, en particulier vanne de contrôle du débit pour systèmes d'injection de carburant des moteurs de combustion interne

(30) Priorität: 10.05.2002 DE 10220717
(43) Veröffentlichungstag der Anmeldung: 12.11.2003
(73) Patentinhaber: ROBERT BOSCH GMBH, 70442 Stuttgart (DE)
(72) Erfinder: Brendle, Matthias, 70563 Stuttgart (DE)

(56) Entgegenhaltungen:
- CH-A- 499 824
- DE-A- 3 133 060
- DE-A- 4 231 428
- US-A- 4 601 458
- US-B1- 6 253 734

## Beschreibung

### Stand der Technik

Die Erfindung betrifft ein Magnetventil, insbesondere ein Mengensteuerventil für Kraftstoffsysteme von Brennkraftmaschinen, mit einer Magnetspule, mit einem Magnetkern, mit einem an einer Stirnseite des Magnetkerns angeordneten Magnetanker, mit einem mit dem Magnetanker verbundenen Ventilelement, und mit mindestens einem Fluidkanal für ein zu schaltendes Fluid, welcher mindestens zwei Abschnitte aufweist, die durch das Ventilelement voneinander trennbar bzw. miteinander verbindbar sind.

Derartige Magnetventile zur Mengensteuerung werden in der Technik für eine Vielzahl von Anwendungsfällen eingesetzt. Sie finden insbesondere Anwendung in Kraftstoffsystemen von Brennkraftmaschinen, mit denen Kraftstoff den Brennräumen einer Brennkraftmaschine zugeführt wird. Durch die Verwendung von Magnetventilen in einem solchen Kraftstoffsystem kann die Kraftstoffmenge beeinflusst bzw. gesteuert werden, die verschiedenen Bereichen des Kraftstoffsystems zugeführt wird.

Magnetventile, die zur Mengensteuerung von mit Druck beaufschlagtem Kraftstoff in modernen Kraftstoffsystemen zum Einsatz kommen, können einen Tauchankermagneten oder einen Plattenankermagneten aufweisen. Tauchankermagnete sind innerhalb eines Magnetkörpers angeordnet und in diesem gleitend geführt. Plattenankermagnete sind endseitig an einem Magnetkern angeordnet. Letztere Anordnung hat den Vorteil, dass zwischen Plattenankermagnet und Magnetkern sehr hohe Schließkräfte erzeugbar sind.

Ein Magnetventil mit einem Plattenankermagnet ist bspw. aus der DE 42 31 428 A1 bekannt. Dieses Magnetventil umfasst einen zentrischen Magnetkern, der von einer Magnetspule umgeben ist. Auf einer Endseite des Magnetkerns ist ein Plattenankermagnet angeordnet, in dem ein als Kugel ausgebildeter Ventilkörper aufgenommen ist. Dem Ventilkörper sind Ventilsitze zugeordnet, die jeweils im Mündungsbereich von angrenzenden Fluidkanälen ausgebildet sind.

Das bekannte Magnetventil wird angesteuert, indem die Magnetspule mit Strom versorgt wird. Hierdurch wird ein umlaufender magnetischer Fluss erzeugt, der zu einer zwischen Plattenankermagnet und Magnetkern wirkenden Kraft führt. Der magnetische Fluss verläuft vom Magnetkern über den Magnetanker über zusätzlich vorgesehene Scheibenelemente und ein Gehäuse wieder zum Magnetkern. Durch die wirkende Kraft wird der Plattenankermagnet vom Magnetkern angezogen, und der kugelförmige Ventilkörper kommt in einem Ventilsitz eines Fluidkanals zur Auflage und verschließt diesen.

US 4 601 458 A offenbart ein Magnetventil mit einem Plattenankermagnet. Der Magnetkern weist eine topfförmige Außenkontur auf, über welche den magnetische Fluss fließt.

Ausgehend von diesem Stand der Technik ist es Aufgabe der Erfindung, ein besonders einfach herzustellendes Magnetventil zu schaffen, das sich durch hohe Zuverlässigkeit und Haltbarkeit auszeichnet.

Diese Aufgabe wird bei einem Magnetventil der eingangs beschriebenen Art erfindungsgemäß dadurch gelöst, dass der Magnetkern im Bereich seines dem Magnetanker zugewandten Endes mit einem umlaufenden, sich radial nach außen erstreckenden Kragen einstückig verbunden ist und dass zwischen dem Magnetkern und dem Kragen mindestens ein Verbindungsabschnitt vorhanden ist, der eine geringere Materialstärke als der Kragen aufweist, derart, dass er als Drossel für den magnetischen Fluss wirkt.

### Vorteile der Erfindung

Bisher erfolgt die Leitung des Magnetflusses in sich radial nach außen erstreckender Richtung durch zusätzliche Elemente, bspw. über eine Polscheibe, wie aus der DE 42 31 428 A1 bekannt. Zwischen einem solchen zusätzlichen Element und dem Magnetkern befindet sich ein Spalt, der aufwändig abgedichtet werden muss.

Durch die erfindungsgemäße einteilige Ausbildung des Magnetkerns mit einem sich radial nach außen erstreckenden Kragen hingegen wird kein zusätzliches und aufwändig abzudichtendes Element benötigt. Die Abdichtung des unter Druck stehenden Bereichs des Magnetventils nach außen ist somit sehr zuverlässig. Der Magnetkern mit angeformtem Kragen kann in bekannter Weise durch Urformen oder, bei rotationssymmetrischer Ausführung des Magnetkerns, spanend als Drehteil hergestellt werden.

Der Verbindungsabschnitt mit seiner geringeren Materialstärke zwischen dem Magnetkern und dem Kragen wirkt als magnetische Drossel, so dass der Magnetfluss von einem mittigen Bereich des Magnetkerns über den Magnetanker besonders gut in den am Magnetkern angeformten Kragen geleitet werden kann. Je geringer die Materialstärke des Verbindungsabschnitts ist, desto stärker ist die hierdurch erzeugte Drosselwirkung für den magnetischen Fluss und damit der Wirkungsgrad des Magnetventils.

Besonders vorteilhafte Weiterbildungen der Erfindung sind in den abhängigen Ansprüchen angegeben.

Nach einer vorteilhaften Ausführungsform umfasst der Verbindungsabschnitt mindestens eine im Wesentlichen in Umfangsrichtung verlaufende durchgehende Rille. Durch eine solche Rille kann der magnetische Fluss in allen radialen Richtungen wirkungsvoll und gleichmäßig gedrosselt werden, so dass der magnetische Fluss jeweils von einem mittigen Bereich des Magnetkerns über den Magnetanker in den über den Verbindungsabschnitt angeformten Kragen eingeleitet werden kann. Eine solche Rille kann durch Urformen beim Herstellen des Magnetkerns auf einfache Weise erzeugt oder nachträglich spanend oder anderweitig abgetragen werden.

Nach einer weiteren Ausführungsform umfasst der Verbindungsabschnitt mindestens zwei wenigstens in etwa gegenüberliegende Rillen. Auch mit dieser Ausführungsform ist eine wirkungsvolle Drosselung, jedoch zusätzlich eine Beeinflussung der Lage des magnetischen Flusses im Bereich des Verbindungsabschnitts möglich. Es ist auch möglich, versetzt zueinander angeordnete Rillen mit unterschiedlichem Durchmesser vorzusehen, die eine magnetische Drosselung bewirken.

Nach einer Ausführungsform der Erfindung sind der Magnetanker und das Ventilelement in einer Schaltkammer aufgenommen, welche einerseits durch den Magnetkern, den Kragen und ggf. den Verbindungsabschnitt und andererseits durch eine Abdeckung begrenzt wird, welche am Kragen befestigt ist. Eine derartig gebildete Schaltkammer hat den Vorteil, dass sie lediglich eine einzige zwischen dem Kragen und der Abdeckung liegende Dichtstelle aufweist. In dieser Schaltkammer befindet sich der Magnetanker und das Ventilelement, das üblicherweise zentrisch im oder am Magnetanker angeordnet ist und mit dem verschiedene Abschnitte des Fluidkanals voneinander getrennt bzw. miteinander verbunden werden können.

Vorteilhafterweise sind die Abdeckung und der Kragen bspw. durch Schweißen unlösbar miteinander verbunden. Da die Kontaktstelle zwischen Abdeckung und Kragen bei der erfindungsgemäßen Anordnung des Magnetventils die einzige Dichtstelle der druckbeaufschlagten Schaltkammer darstellt, könnte lediglich an dieser Stelle mit Druck beaufschlagtes Fluid austreten und eine Leckage bilden.

Indem die Kontaktstelle zwischen Abdeckung und Kragen durch eine unlösbare Verbindung vollständig abgedichtet wird, ist das Magnetventil wartungsfrei. Bspw. können der Kragen und die Abdeckung entlang eines in Umfangsrichtung verlaufenden Bereichs miteinander verschweißt werden, was den Vorteil hat, dass keine zusätzlichen Dichtmittel bereitgestellt werden müssen, und dass dennoch eine besonders zuverlässige und langlebige Abdichtung der Schaltkammer realisiert wird. Es können auch andere geeignete Verbindungstechniken wie bspw. Löten oder Kleben zum Einsatz kommen.

Bei einer anderen Weiterbildung der Erfindung ist mindestens einer der beiden Abschnitte des Fluidkanals im Magnetkern ausgebildet. Ein solches Magnetventil baut klein.

Nach einer besonders vorteilhaften Ausführungsform sind beide Abschnitte des Fluidkanals im Magnetkern ausgebildet, wobei ein Abschnitt mittig und der andere außermittig angeordnet ist. Bspw. kann der mittig im Magnetkern ausgebildete Abschnitt des Fluidkanals ausgehend von einem Einlass in die Schaltkammer münden und dort einen Ventilsitz ausbilden, der zur Aufnahme eines mit dem Magnetanker verbundenen Ventilkörpers dient. Ein außermittig ausgebildeter Abschnitt des Fluidkanals kann parallel zum mittig ausgebildeten Abschnitt des Fluidkanals im Magnetkern ausgebildet sein und von der Schaltkammer zu einem Auslass führen. Durch eine solche Ausbildung kann ein 2/2-Wegeventil gebildet werden, das eine kurze Einbauhöhe aufweist, wobei die Abdeckung des Magnetventils flach ausgeführt werden kann.

Vorgeschlagen wird auch, dass beide Abschnitte des Fluidkanals im Bereich des dem Kragen entgegengesetzten Endes des Magnetkerns münden. Durch diese Ausführung kann einerseits die Abdeckung des Magnetventils einfach und flach ausgebildet werden. Andererseits kann die Abdichtung der Fluidkanäle gegenüber einem Element, das das Magnetventil trägt, kompakt und einfach gestaltet werden. Bei der Montage des Magnetventils in einem externen Träger, bspw. in einer Hochdruckpumpe, ist es durch die vorgeschlagene Anordnung des Fluidkanals möglich, durch nur einen Fügevorgang eine Abdichtung zwischen den Mündungen beider Abschnitte des Fluidkanals und dem externen Träger zu erreichen.

Gegebenenfalls ist in der Abdeckung mindestens ein Fluidkanal vorhanden. Somit kann ohne Veränderung aller weiteren Bestandteile des Magnetventils durch einfachen Austausch der Abdeckung auch ein 3/2-Wegeventil realisiert werden.

Nach einer Weiterbildung der Erfindung ist vorgesehen, dass der Kragen mindestens auf der dem Magnetanker zugewandten Seite und/oder der Magnetanker mindestens auf der dem Kragen zugewandten Seite eine nicht magnetisierbare Oberflächenschicht aufweist. Durch diese kann zwischen Magnetanker und Kragen ein Spalt ausgebildet werden, der verhindert, dass beim Wechsel vom bestromten in den unbestromten Zustand des Magnetventils der Magnetanker am Magnetkern haften bleibt. Ein solches Haften hätte zur Folge, dass das Magnetventil verzögert anspricht. Die Oberflächenschicht verbessert also das Ansprechverhalten des Magnetventils.

Eine solche Oberflächenschicht kann durch nachträgliches Aufbringen zusätzlicher Materialschichten auf den Kragen des Magnetkerns oder auf den Magnetanker gebildet werden. Es ist aber auch möglich, den Magnetanker aus einem Ausgangsmaterial zu formen, das bereits eine Oberflächenschicht aufweist, die nicht magnetisierbar ist.

Der Magnetanker weist bspw. auf seiner Oberfläche einen kalottenförmigen Vorsprung auf, der geeignet ist, in eine sphärisch ausgebildete Aussparung in der Abdeckung des Magnetventils geführt zu werden, so dass der Magnetanker in axialer Richtung bewegbar und in radialer Richtung festgelegt ist, wobei die Vorsprünge auf der Oberfläche des Magnetankers mit dem Verbindungsabschnitt zusammenwirken. Dies hat den Vorteil, dass der Magnetanker in radialer Richtung sicher geführt ist, ohne dass separate Aussparungen vorgesehen werden müssen.

Möglicherweise sind auf der Oberfläche des Magnetankers Vorsprünge vorgesehen, die komplementär zum Verbindungsabschnitt ausgebildet sind, der bspw. wie oben beschrieben eine Rille aufweist. Bei Ausgestaltung der Vorsprünge als komplementären Torusabschnitt bleibt der Magnetanker axial bewegbar und wird gleichzeitig in seiner Bewegung in radialer Richtung festgelegt. Somit können radiale Schwingbeschleunigungen durch Kontakt zwischen dem Vorsprung (in Form des Torusabschnitts) und der Aussparung (in Form der Rille) aufgenommen werden.

### Zeichnung

Nachfolgend wird ein Ausführungsbeispiel der Erfindung unter Bezugnahme auf die beiliegende Zeichnung im Detail erläutert.

In der Zeichnung zeigen:
- Figur 1: ein Blockschaltbild eines Kraftstoffsystems mit einem Magnetventil;
- Figur 2: eine perspektivische Explosionsdarstellung des Magnetventils von Figur 1; und
- Figur 3: einen Längsschnitt durch das Magnetventil von Figur 1.

### Beschreibung des Ausführungsbeispiels

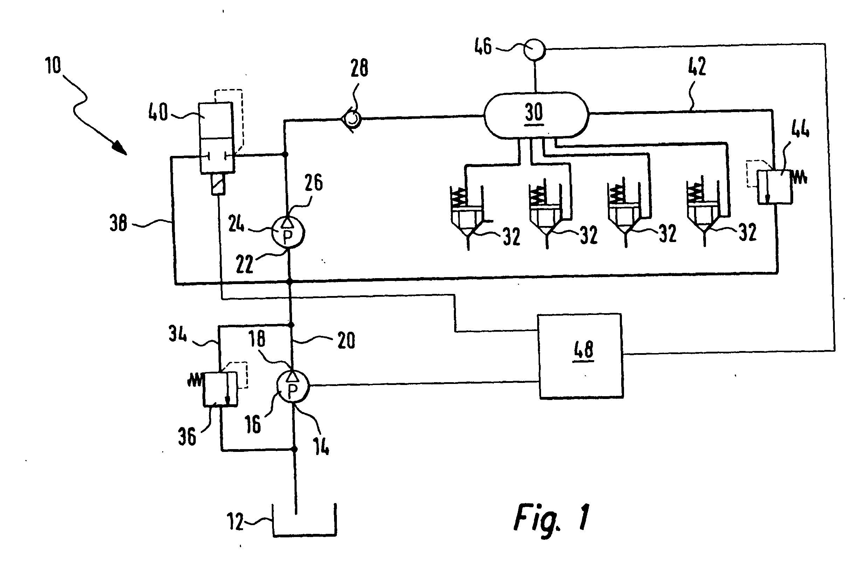

In Fig. 1 trägt ein Kraftstoffsystem insgesamt das Bezugszeichen 10. Es umfasst einen Kraftstoffbehälter 12, welcher mit einem Einlass 14 einer elektrischen Kraftstoffpumpe 16 verbunden ist. Ein Auslass 18 der elektrischen Kraftstoffpumpe 16 ist über eine Kraftstoffleitung 20 mit dem Einlass 22 einer Hochdruckpumpe 24 verbunden. Diese wird auf nicht näher Art und Weise mechanisch von einer Brennkraftmaschine angetrieben.

Ein Auslass 26 der Hochdruckkraftstoffpumpe 24 ist über ein Rückschlagventil 28 mit einer Kraftstoff-Sammelleitung 30 verbunden. Diese wird gemeinhin auch als "Rail" bezeichnet. An die Kraftstoffsammelleitung 30 sind in dem in Fig. 1 dargestellten Ausführungsbeispiel insgesamt vier Kraftstoff-Einspritzvorrichtungen 32 angeschlossen. Bei diesen handelt es sich im vorliegenden Ausführungsbeispiel um Hochdruck-Einspritzventile bzw. Injektoren. Diese sind an einem in der Fig. 1 nicht dargestellten Motorblock befestigt und spritzen den Kraftstoff direkt in einen ebenfalls nicht dargestellten Brertnraum ein.

Der Auslass 18 der elektrischen Kraftstoffpumpe 16 ist mit dem Einlass 14 der elektrischen Kraftstoffpumpe 16 über eine Kraftstoffleitung 34 verbunden. In dieser ist ein Druckbegrenzungsventil 36 angeordnet. Vom Auslass 26 der Kraftstoff-Hochdruckpumpe 24 führt ebenfalls eine Kraftstoffleitung 38 zurück zum Einlass 22 der Kraftstoff-Hochdruckpumpe 24. In der Kraftstoffleitung 38 ist ein Magnetventil 40 zur Mengensteuerung angeordnet, welches weiter unten im Detail beschrieben ist.

Von der Kraftstoff-Sammelleitung 30 führt eine Kraftstoffleitung 42 zum Einlass 22 der Kraftstoffhochdruckpumpe 24 zurück. In dieser Krafstoffleitung 42 ist ein Druckbegrenzungsventil 44 angeordnet. Durch dieses wird der Druck in der Krafstoff-Sammelleitung 30 auf bspw. 120 bar begrenzt.

Der Druck in der Kraftstoff-Sammelleitung 30 wird von einem Sensor 46 erfasst. Dieser liefert Signale an ein Steuerund Regelgerät 48. Ausgangsseitig steuert das Steuer- und Regelgerät 48 die elektrische Kraftstoffpumpe 16 sowie das Magnetventil 40 zur Mengensteuerung an.

Im Normalbetrieb der Brennkraftmaschine wird der Kraftstoff von der elektrischen Kraftstoffpumpe 16 aus dem Kraftstoffbehälter 12 angesaugt und auf ca. 4 bar vorverdichtet. Dieser Druck wird durch das Druckbegrenzungsventil 36 eingestellt. Der Kraftstoff wird dann von der Hochdruck-Kraftstoffpumpe 24 auf einen Druck bis zu 120 bar weiter verdichtet. Mit diesem Druck wird der Kraftstoff von der Hochdruck-Kraftstoffpumpe 24 in die Kraftstoff-Sammelleitung 30 gefördert. Die Fördermenge wird dabei durch das Magnetventil 40 zur Mengensteuerung eingestellt. Von der Kraftstoff-Sammelleitung 30 gelangt der Kraftstoff zu den Injektoren 32, welche den Kraftstoff in den Brennraum einspritzen.

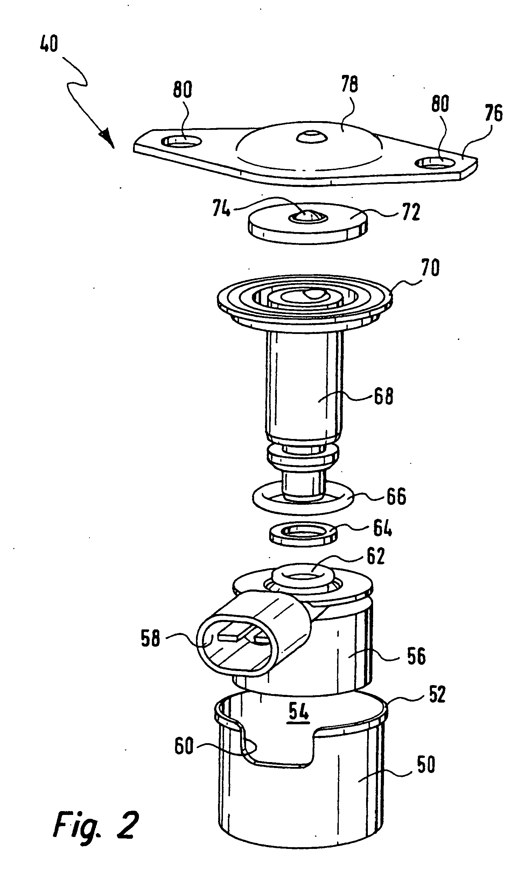

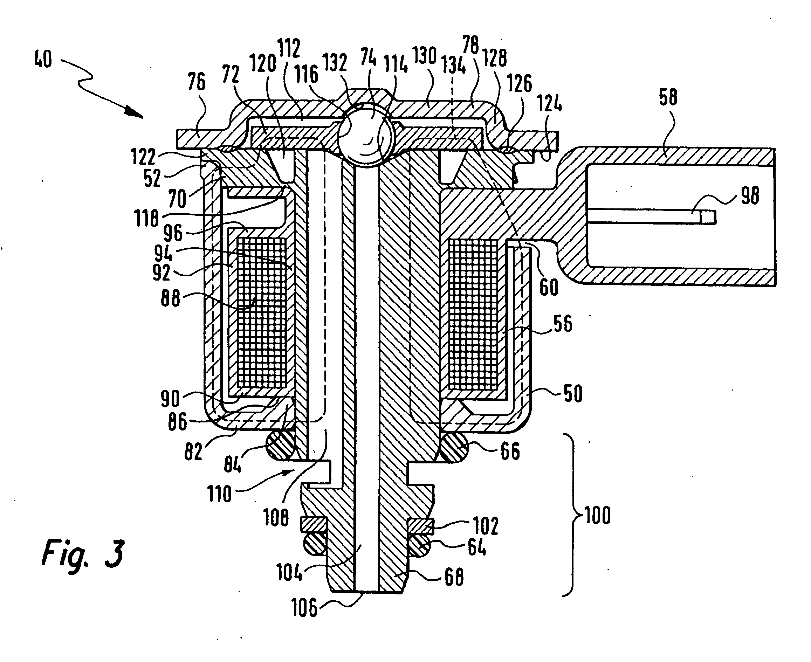

Fig. 2 zeigt eine Explosionsansicht des Magnetventils 40. Diese Ansicht soll lediglich einen Überblick über einige Bestandteile des Magnetventils 40 vermitteln. Im Detail werden der Aufbau und die Funktionsweise des Magnetventils 40 unter Bezugnahme auf Fig. 3 beschrieben.

Gemäß Fig. 2 weist das Magnetventil 40 einen kreiszylindrischen Magnettopf 50 auf. Der Magnettopf 50 besteht aus einem magnetisierbaren Material. Er weist einen in Fig. 2 oben angeordneten Rand 52 und einen Aufnahmeraum 54 auf. In diesem Aufnahmeraum 54 ist ein insgesamt kreiszylindrischer Einsatz 56 aufgenommen. Der Einsatz 56 bildet ein Gehäuse aus Kunststoffmaterial für eine in Fig. 2 nicht dargestellte Magnetspule und umfasst eine direkt an das Gehäuse angespritzte Steckeraufnahme 58.

Der Rand 52 des Magnettopfs 50 weist eine Aussparung 60 auf, in der die Steckeraufnahme 58 des Einsatzes 56 liegt.

Die Steckeraufnahme 58 kann externe, nicht dargestellte Stecker mit elektrischen Kontaktmitteln aufnehmen, um eine elektrische Verbindung zwischen einer Stromversorgungsquelle und der im Einsatz 56 befindlichen Magnetspule herzustellen.

Der Einsatz 56 weist ein zentrisches Durchgangsloch 62 auf, in das ein Magnetkern 68 eingeschoben ist. Der Magnetkern 68 ist rotationssymmetrisch ausgebildet, hat einen kreiszylindrischen Querschnitt und weist an einem stirnseitigen, in Fig. 2 oberen Ende einen umlaufenden ringscheibenartigen, sich radial nach außen erstreckenden Kragen 70 auf, der mit dem Magnetkern 68 einstückig verbunden ist. An dem in Fig. 2 unteren Ende des Magnetkerns 68 sind ein kleiner O-Ring 64 sowie ein großer O-Ring 66 vorgesehen.

Das Magnetventil 40 umfasst weiterhin einen kreisscheibenförmigen Magnetanker 72, der einen mittig angeordneten, als Kugel ausgebildeten Ventilkörper 74 aufnimmt. Der Ventilkörper 74 ist derart vom Magnetanker 72 aufgenommen, dass er zwar um seinen Mittelpunkt verdrehbar, aber seine Position relativ zum Magnetanker 72 nicht änderbar ist.

Das Magnetventil 40 wird durch eine Abdeckung 76 komplettiert. Die Abdeckung 76 weist mittig angeordnet eine Ausbuchtung 78 auf, die zur Aufnahme des Magnetankers 72 mit dem Ventilkörper 74 dient. Die Abdeckung 76 ist außerdem mit Durchbrüchen 80 versehen, durch die zusätzliche, nicht dargestellte Befestigungsmittel wie bspw. Schrauben eingeschoben werden können, um das Magnetventil 40 an einem nicht dargestellten externen Träger, bspw. an der Hochdruckpumpe 24, zu befestigen. Hierbei werden die O-Ringe 64 und 66 zusammengedrückt, so dass das Magnetventil 40 abgedichtet werden kann. Darüber hinaus werden der Magnetkern 68 und der Einsatz 56 über die Abdeckung 76 im Magnettopf 50 gehalten.

In Fig. 3 ist das Magnetventil 40 in einem Längsschnitt detailliert dargestellt. Im Folgenden wird zunächst der Aufbau des Magnetventils im Einzelnen beschrieben, bevor anschließend auf die Funktionsweise des Magnetventils eingegangen wird.

In Fig. 3 ist der Magnettopf 50 erkennbar, in den der Magnetkern 68 eingeschoben ist. Der Magnettopf 50 weist einen Bodenbereich 82 auf, an dessen radial innerem Rand ein umlaufender zum Einsatz 56 weisender Steg 84 vorgesehen ist. Durch den Steg 84 wird die zylindrische Kontaktfläche zwischen Magnettopf 50 und Magnetkern 68 großflächig ausgebildet und der magnetische Widerstand im Übergang zwischen den Bauteilen verringert. Der Steg 84 dient auch als Anschlag für den in den Magnettopf 50 eingeschobenen Einsatz 56, der mit einer Anschlagfläche 86 am Steg 84 anliegt.

Im Einsatz 56 ist eine Magnetspule 88 angeordnet, die um den Magnetkern 68 herum verläuft und von den Wandbereichen 90, 92, 94 und 96 des Einsatzes 56 vollständig umgeben ist. Die Magnetspule 88 ist auf nicht näher dargestellte Art und Weise mit elektrischen Kontaktmitteln 98 verbunden, die in der Steckeraufnahme 58 angeordnet sind. In die Steckeraufnahme 58 kann ein nicht dargestellter externer Stecker eingeführt werden, um die Magnetspule 88 über die elektrischen Kontaktmittel 98 und die genannte Verbindung zur Magnetspule 88 mit Strom zu versorgen.

Das Magnetventil 40 steht in Einbaulage hydraulisch mit dem externen Träger, bspw. der Hochdruckpumpe 24, in Verbindung. Das Magnetventil 40 wird über einen am Magnetkern 68 ausgebildeten Anschlussabschnitt 100 in eine nicht dargestellte Stufenbohrung in einem Gehäuse der Hochdruckpumpe 24 eingesetzt. Dabei kommen die O-Ringe 64 und 66 in Anlage an Stufen der Stufenbohrung. Gemäß Fig. 3 findet zusätzlich eine Stützscheibe 102 Verwendung. Durch die Verwendung der Stützscheibe wird verhindert, dass der O-Ring 64 in den zwischen der Bohrung des Gehäuses der Hochdruckpumpe 24 und dem Magnetkern 68 gebildeten Spalt hineinextrudiert wird. Zusätzlich kann das gleiche Magnetventil 40 in unterschiedlich dimensionierte Stufenbohrungen eingesetzt werden, ohne die Geometrie des Anschlussabschnitts 100 verändern zu müssen.

Im Anschlussabschnitt 100 münden verschiedene Abschnitte eines im Magnetkern 68 ausgebildeten Fluidkanals. Ein erster Fluidkanalabschnitt 104 ist als im Magnetkern 68 zentrisch angeordneter Kanal vorgesehen, der in einen Stirnbereich 106 des Anschlussabschnitts 100 mündet. Der Fluidkanalabschnitt 104 steht mit einem nicht dargestellten Hochdruckbereich der Hochdruckpumpe 24 in Verbindung. Parallel zum ersten Fluidkanalabschnitt 104 ist ein gegenüber der Mittelachse des Magnetkerns 68 versetzter zweiter Fluidkanalabschnitt 108 vorgesehen, der zwischen dem kleinen O-Ring 64 und dem großen O-Ring 66 in einen Seitenbereich 110 des Anschlussabschnitts 100 mündet. Der Fluidkanalabschnitt 108 steht mit. einem nicht dargestellten Niederdruckbereich der Hochdruckpumpe 24 in Verbindung.

Auf der vom Anschlussabschnitt 100 abgewandten Seite des Magnetkerns 68 münden die Fluidkanalabschnitte 104 und 108 in eine Schaltkammer 112. Diese ist in der in Fig. 3 dargestellten Lage des Magnetventils 40 nach unten durch den Magnetkern 68 mit dem Kragen 70 und nach oben durch die Abdeckung 76 mit der Ausbuchtung 78 begrenzt. In der Schaltkammer 112 sind der Magnetanker 72 und der Ventilkörper 74 angeordnet.

Der Fluidkanalabschnitt 104 weist in seinem zur Schaltkammer 112 hin gelegenen Mündungsbereich einen Ventilsitz 114 für den Ventilkörper 74 auf. Der Ventilkörper 74 ist in einer Kugelaufnahme 116 im Magnetanker 72 gehalten. Durch diese Kugelaufnahme ist der als Kugel ausgebildete Ventilkörper 74 innerhalb des Magnetankers 72 um seinen Mittelpunkt verdrehbar, ohne dass die laterale oder axiale Position des Ventilkörpers 74 relativ zum Magnetanker 72 änderbar ist.

Der Magnetkern 68 weist auf der der Schaltkammer 112 zugewandten Seite einen Verbindungsabschnitt 118 zum Kragen 70 auf. Der Verbindungsabschnitt 118 weist eine geringere Materialstärke als der Kragen 70 auf, derart, dass auf seiner der Schaltkammer 112 zugewandten Seite eine Rille 120 entsteht. Die Rille könnte, abweichend von der in Fig. 3 dargestellten Ausführungsform, auch auf der der Schaltkammer 112 abgewandten Seite ausgebildet sein. Durch die Rille 120 wird ein bei Bestromung der Magnetspule 88 des Magnetventils 40 entstehender magnetischer Fluss gedrosselt. Hierauf wird weiter unten im Rahmen der Funktionsbeschreibung des Magnetventils noch näher eingegangen.

Der Kragen 70 weist einen größeren Durchmesser als der Magnetanker 72 auf und liegt mit einer in Fig. 3 unteren Fläche eines Auflagebereichs 122 auf dem Rand 52 des Magnettopfs 50 auf. An der in Fig. 3 oberen Fläche des Auflagebereichs 122 liegt die Abdeckung 76 mit einer Auflagefläche 124 an. Die Auflagefläche 124 der Abdeckung 76 und der Kragen 70 sind über eine Schweißverbindung 126 fest miteinander verbunden. Durch diese Schweißverbindung wird eine zuverlässige und dauerhafte Abdichtung der Schaltkammer 112 gewährleistet.

Die Abdeckung 76 weist die bereits oben erwähnte Ausbuchtung 78 auf, die einen in etwa zylindrischen und die Schaltkammer 112 radial begrenzenden Wandbereich 128 und einen die Schaltkammer 112 axial begrenzenden insgesamt ebenen Abdeckungsbereich 130 umfasst. Zentrisch im Abdeckungsbereich 130 ist ein als sphärische Ausnehmung ausgebildeter Ventilkörperanschlag 132 ausgebildet. Dieser Anschlag dient der Begrenzung der Bewegung des Ventilkörpers 74 und des Magnetankers 72 in axialer Richtung, wobei durch die sphärische Ausgestaltung des Ventilkörperanschlags 132 zusätzlich eine Führung des Ventilkörpers 74 in radialer Richtung ermöglicht wird. Hierdurch kann vermieden werden, dass der Ventilkörper 74 und der Magnetanker 72 durch radiale Schwingbeschleunigungen gegen den Wandbereich 128 der Abdeckung 76 gestoßen werden.

Das Magnetventil 40 funktioniert folgendermaßen:

In Fig. 3 ist das Magnetventil 40 im geschlossen Zustand dargestellt. Der erste Fluidkanalabschnitt 104 ist durch Auflage des Ventilkörpers 74 auf dem Ventilsitz 114 verschlossen. Dies wird dadurch erreicht, dass der Magnetanker 72 vom Magnetkern 68 angezogen ist, so dass der Ventilkörper 74 in den Ventilsitz 114 gedrückt ist.

Damit der Magnetanker 72 vom Magnetkern 68 angezogen wird, wird die Magnetspule 88 über die elektrischen Kontaktmittel 98 bestromt. Hierdurch entsteht ein magnetischer Fluss, der in Fig. 3 mit dem Bezugszeichen 134 gekennzeichnet ist. Der Magnetfluss 134 verläuft vom Magnetkern 68 über den Magnetanker 72, über den Kragen 70 und über den Magnettopf 50 wieder zum Magnetkern 68.

In diesem Zusammenhang kommt dem Verbindungsabschnitt 118 bzw. der Rille 120 eine entscheidende Bedeutung zu. Ohne die Rille 120, die als Drossel für den magnetischen Fluss 134 wirkt, verliefe der Magnetfluss 134 nicht oder nicht ausreichend über den Magnetanker 72. Eine ausreichende Schließkraft, mit der der Magnetanker 72 in Richtung zum Magnetkern 68 beaufschlagt wird, wird also vor allem dadurch aufgebracht, dass der Magnetfluss aufgrund der als Drossel wirkenden Rille 120 über den Magnetanker 72 geleitet wird. Durch die Anlage des Ventilkörpers 74 im Ventilsitz 114 kann unter Hochdruck stehendes Fluid im ersten Fluidkanalabschnitt 104 nicht in den zweiten Fluidkanalabschnitt 108 strömen.

Im unbestromten Zustand des Magnetventils 40 hingegen kann das unter Hochdruck stehende Fluid im Fluidkanalabschnitt 104 den Ventilkörper 74 aus dem Ventilsitz 114 heben, so dass eine fluidische Verbindung zwischen den Fluidkanalabschnitten 104 und 108 entsteht und somit das Magnetventil 40 geöffnet wird. In diesem in Fig. 3 nicht dargestellten Zustand liegt der Ventilkörper 74 in dem Ventilkörperanschlag 132 im Wesentlichen flächig an. Durch die sphärische Ausgestaltung des Ventilkörperanschlags 132 können sich der Ventilkörper 74 und der Magnetanker 72 im geöffneten Zustand des Magnetventils 40 in radialer Richtung nicht bewegen.

## Patentansprüche

1. Magnetventil (40), insbesondere Mengensteuerventil für Kraftstoffsysteme (10) von Brennkraftmaschinen, mit einer Magnetspule (88), mit einem Magnetkern (68), mit einem an einer Stirnseite des Magnetkerns (68) angeordneten Magnetanker (72), mit einem mit dem Magnetanker (72) verbundenen Ventilelement (74), mit mindestens einem Fluidkanal für ein zu schaltendes Fluid, welcher mindestens zwei Abschnitte (104, 108) aufweist, die durch das Ventilelement (74) voneinander trennbar bzw. miteinander verbindbar sind, **dadurch gekennzeichnet, dass** der Magnetkern (68) im Bereich seines dem Magnetanker zugewandten Endes mit einem umlaufenden, sich radial nach außen erstreckenden Kragen (70) einstückig verbunden ist und dass zwischen dem Magnetkern (68) und dem Kragen (70) mindestens ein Verbindungsabschnitt (118) vorhanden ist, der eine geringere Materialstärke als der Kragen (70) aufweist derart, dass er als Drossel für den magmetischen Fluss wirkt.

2. Magnetventil (40) nach Anspruch 1, **dadurch gekennzeichnet, dass** der Verbindungsabschnitt (118) mindestens eine im Wesentlichen in Umfangsrichtung verlaufende durchgehende Rille (120) umfasst.

3. Magnetventil (40) nach Anspruch 2, **dadurch gekennzeichnet, dass** der Verbindungsabschnitt (118) mindestens zwei wenigstens in etwa gegenüberliegende Rillen umfasst.

4. Magnetventil (40) nach einem der vorhergehenden Ansprüche, **dadurch gekennzeichnet, dass** der Magnetanker (72) und das Ventilelement (74) in einer Schaltkammer (112) aufgenommen sind, welche einerseits durch den Magnetkern (68), den Kragen (70) und den Verbindungsabschnitt (118) und andererseits durch eine Abdeckung (76) begrenzt wird, welche am Kragen (70) befestigt ist.

5. Magnetventil (40) nach Anspruch 4, **dadurch gekennzeichnet, dass** die Abdeckung (76) und der Kragen (70) unlösbar miteinander verbunden sind.

6. Magnetventil (40) nach Anspruch 5, **dadurch gekennzeichnet, dass** die Abdeckung (76) und der Kragen (70) miteinander verschweißt sind.

7. Magnetventil (40) nach einem der vorhergehenden Ansprüche, **dadurch gekennzeichnet, dass** mindestens einer der beiden Abschnitte des Fluidkanals (104, 108) im Magnetkern (68) ausgebildet ist.

8. Magnetventil (40) nach einem der vorhergehenden Ansprüche, **dadurch gekennzeichnet, dass** beide Abschnitte des Fluidkanals (104, 108) im Magnetkern (68) ausgebildet sind, wobei ein Abschnitt (104) mittig und der andere Abschnitt (108) außermittig angeordnet ist.

9. Magnetventil (40) nach Anspruch 8, **dadurch gekennzeichnet, dass** beide Abschnitte des Fluidkanals (104, 108) im Bereich des dem Kragen (70) entgegengesetzten Endes (100) des Magnetkerns (68) münden.

10. Magnetventil (40) nach einem der Ansprüche 4 bis 9, **dadurch gekennzeichnet, dass** in der Abdeckung (76) mindestens ein Fluidkanal vorhanden ist.

11. Magnetventil (40) nach einem der vorhergehenden Ansprüche, **dadurch gekennzeichnet, dass** der Kragen (70) mindestens auf der dem Magnetanker (72) zugewandten Seite und/oder der Magnetanker (72) mindestens auf der dem Kragen (70) zugewandten Seite eine nicht magnetisierbare Oberflächenschicht aufweist.

12. Magnetventil (40) nach einem der vorhergehenden Ansprüche, **dadurch gekennzeichnet, dass** auf der Oberfläche des Magnetankers (72) Vorsprünge vorgesehen sind, die mit dem Verbindungsabschnitt (118) zusammenwirken.

## Claims

1. Solenoid valve (40), in particular quantity control valve for fuel systems (10) of internal combustion engines, with a magnet coil (88), with a magnet core (68), with a magnet armature (72) arranged on one end face of the magnet core (68), with a valve element (74) connected to the magnet armature (72), and with at least one fluid duct for a fluid to be switched, the said fluid duct having at least two portions (104, 108) which are separable from one another or connectable to one another by means of the valve element (74), **characterized in that** the magnet core (68) is connected in one piece, in the region of its end facing the magnet armature, to a peripheral collar (70) extending radially outwards, and **in that**, between the magnet core (68) and the collar (70), at least one connection portion (118) is present, which has a smaller material thickness than the collar (70), in such a way that it acts as a throttle for the magnetic flux.

2. Solenoid valve (40) according to Claim 1, **characterized in that** the connection portion (118) comprises at least one continuous groove (120) running essentially in the circumferential direction.

3. Solenoid valve (40) according to Claim 2, **characterized in that** the connection portion (118) comprises at least two grooves lying at least approximately opposite one another.

4. Solenoid valve (40) according to one of the preceding claims, **characterized in that** the magnet armature (72) and the valve element (74) are received in a switching chamber (112) which is delimited, on the one hand, by the magnet core (68), the collar (70) and the connection portion (118) and, on the other hand, by a cover (76) which is fastened to the collar (70).

5. Solenoid valve (40) according to Claim 4, **characterized in that** the cover (76) and the collar (70) are connected unreleasably to one another.

6. Solenoid valve (40) according to Claim 5, **characterized in that** the cover (76) and the collar (70) are welded to one another.

7. Solenoid valve (40) according to one of the preceding claims, **characterized in that** at least one of the two portions of the fluid duct (104, 108) is formed in the magnet core (68).

8. Solenoid valve (40) according to one of the preceding claims, **characterized in that** both portions of the fluid duct (104, 108) are formed in the magnet core (68), one portion (104) being arranged centrally and the other portion (108) being arranged eccentrically.

9. Solenoid valve (40) according to Claim 8, **characterized in that** the two portions of the fluid duct (104, 108) issue in the region of that end (100) of the magnet core (68) which is opposite the collar (70).

10. Solenoid valve (40) according to one of Claims 4 to 9, **characterized in that** at least one fluid duct is present in the cover (76).

11. Solenoid valve (40) according to one of the preceding claims, **characterized in that** the collar (70), at least on the side facing the magnet armature (72), and/or the magnet armature (72), at least on the side facing the collar (70), have/has a non-magnetizable surface layer.

12. Solenoid valve (40) according to one of the preceding claims, **characterized in that** projections which cooperate with the connection portion (118) are provided on the surface of the magnet armature (72).

## Revendications

1. Electrovanne (40), notamment vanne de commande de débit pour des systèmes d'alimentation en carburant (10) de moteurs à combustion interne comportant une bobine électromagnétique (88), un noyau magnétique (68), un induit (72) porté par la face frontale du noyau magnétique (68), un élément de soupape (74) relié à l'induit magnétique (72), au moins un canal de fluide pour le fluide à commuter, ayant au moins deux segments (104, 108) qui peuvent être séparés ou reliés par l'élément de soupape (74),
**caractérisée en ce que**
le noyau magnétique (68) comporte dans la région de son extrémité tournée vers l'induit magnétique, une collerette (70) périphérique, s'étendant radialement vers l'extérieur, reliée en une seule pièce et
au moins un segment de liaison (118) entre le noyau magnétique (68) et la collerette (70), ce segment ayant une épaisseur de matière inférieure à celle de la collerette (70) de façon à fonctionner comme organe d'étranglement du flux magnétique.

2. Electrovanne (40) selon la revendication 1,
**caractérisée en ce que**
le segment de liaison (118) comporte au moins une rainure (120) continue, située pratiquement dans la direction périphérique.

3. Electrovanne (40) selon la revendication 2,
**caractérisée en ce que**
le segment de liaison (118) comporte au moins deux rainures sensiblement opposées.

4. Electrovanne (40) selon l'une des revendications précédentes,
**caractérisée en ce que**
l'induit magnétique (72) et l'élément de soupape (74) sont logés dans une chambre de commutation (112) délimitée d'un côté par le noyau magnétique (68), la collerette (70) et le segment de liaison (118) et de l'autre par un couvercle (76) fixé à la collerette (70).

5. Electrovanne (40) selon la revendication 4,
**caractérisée en ce que**
le couvercle (76) et la collerette (70) sont reliés solidairement.

6. Electrovanne (40) selon la revendication 5,
**caractérisée en ce que**
le couvercle (76) et la collerette (70) sont soudés.

7. Electrovanne (40) selon l'une des revendications précédentes,
**caractérisée en ce qu'**
au moins l'un des deux segments du canal de fluide (104, 108) est réalisé dans le noyau magnétique (68).

8. Electrovanne (40) selon l'une des revendications précédentes,
**caractérisée en ce que**
les deux segments du canal de fluide (104, 108) sont réalisé dans le noyau magnétique (68) et un segment (104) est au centre et l'autre segment (108) est décentré.

9. Electrovanne (40) selon la revendication 8,
**caractérisée en ce que**
les deux segments du canal de fluide (104, 108) débouchent dans la région de l'extrémité (100) du noyau magnétique (68) à l'opposé de la collerette (70).

10. Electrovanne (40) selon l'une des revendications 4 à 9,
**caractérisée par**
au moins un canal de fluide dans le couvercle (76).

11. Electrovanne (40) selon l'une des revendications précédentes,
**caractérisée en ce que**
la collerette (70) comporte au moins sur le côté tourné vers l'induit magnétique (72) et/ou l'induit magnétique (72) comporte sur au moins un côté tourné vers la collerette (70), une couche de surface non magnétisable.

12. Electrovanne (40) selon l'une des revendications précédentes,
**caractérisée en ce que**
la surface de l'induit magnétique (72) comporte des parties en saillie coopérant avec le segment de liaison (118).
